# EUROPEAN PATENT APPLICATION

(11) **EP 4 749 804 A1**
(43) Date of publication of application: **27.05.2026**
(21) Application number: 25211263.6
(22) Date of filing: 27.10.2025
(51) Int. Cl.: H01M 50/503, H01M 50/507, H01M 50/522, H01M 50/583

(54) **BUSBAR COMPRISING TABS AND A FUSE LINK**

(30) Priority: 25.11.2024 GB 202417257
(71) Applicant: Rolls-Royce plc, London N1 9FX (GB)
(72) Inventor: Ozguc, Murat Kubilay, Derby, DE24 8BJ (GB)
(74) Representative: Rolls-Royce plc

(57) **Abstract**

There is provided a busbar (300, 301, 302) comprising a plurality of tabs (312, 314, 316), a fuse link (323, 325) and a cartridge (333, 335). The plurality of tabs (312, 314, 316) are offset from one another along a separation direction (502), with each tab (312, 314, 316) being configured to electrically couple with at least one energy storage device (400). The fuse link (323, 325) extends between two adjacent tabs (312, 314, 316) of the plurality of tabs (312, 314, 316), with the fuse link (323, 325) being configured to form a gap (355) when a fault current flows along the fuse link (323, 325). The cartridge (333, 335) surrounds the fuse link (323, 325). The cartridge (333, 335) is configured to inhibit electrical arcing originating from the gap (355).

## Description

### CROSS REFERENCE TO RELATED APPLICATIONS

This represents the first application directed towards the subject-matter.

### FIELD

This disclosure relates to a busbar comprising tabs and a fuse link extending between the tabs. This disclosure further relates to vehicle comprising such a busbar.

### BACKGROUND

It is known to use busbars to couple (e.g., connect) multiple electrical energy storage devices, such as cell batteries, to one another within an electrical system. Managing current flow(s) between electrical energy storage devices is important for a variety of reasons, including mitigating risk(s) of overheating, thermal runaway, or overcharging. Such events can lead to system-level failures.

The present invention has been devised with the foregoing in mind.

### SUMMARY

According to a first aspect there is provided a busbar comprising: a plurality of tabs offset from one another along a separation direction, each tab being configured to electrically couple (e.g., electrically connect) with at least one energy storage device; a fuse link extending between two adjacent tabs of the plurality of tabs, the fuse link being configured to form a gap when a fault current flows along the fuse link.

In an embodiment, the at least one energy storage device is at least one cell battery.

In an embodiment, the fuse link is integral with the adjacent tabs.

In an embodiment, the busbar comprises a cartridge configured to inhibit electrical arcing originating from (e.g., across) the gap. In an embodiment, the cartridge is configured to contain electrical arcing across the gap.

In an embodiment, the cartridge surrounds (e.g., at least partially surrounds) the fuse link. In an embodiment, the cartridge abuts the fuse link. In an embodiment, the cartridge includes complementary elements. In an embodiment, the complementary elements cooperate to surround the fuse link. In an embodiment, the cartridge surrounds the fuse link at a location of a minimum cross-sectional area of the fuse link in any reference plane normal to the separation direction.

In an embodiment, an external perimeter of the cartridge in any reference plane normal to the separation direction does not extend beyond an external perimeter of each adjacent tab in any reference plane normal to the separation direction.

**In** an embodiment, the external perimeter of the cartridge in any cartridge reference plane normal to the separation direction and intersecting the cartridge does not extend beyond the external perimeter of each adjacent tab in any tab reference plane normal to the separation direction and intersecting the respective adjacent tab.

**In** an embodiment, a minimum cross-sectional area of the fuse link in any reference plane normal to the separation direction is smaller than a minimum cross-sectional area of each adjacent tab in any reference plane normal to the separation direction.

**In** an embodiment, a minimum cross-sectional area of the fuse link in any fuse link reference plane normal to the separation direction and intersecting the fuse link is smaller than a minimum cross-sectional area of each adjacent tab in any tab reference plane normal to the separation direction and intersecting the respective adjacent tab.

In an embodiment, a maximum cross-sectional area of the fuse link in any reference plane normal to the separation direction (e.g., in any fuse link reference plane normal to the separation direction and intersecting the fuse link) is greater than a minimum cross-sectional area of each adjacent tab in any reference plane normal to the separation direction (e.g., in any tab reference plane normal to the separation direction and intersecting the respective adjacent tab).

In an embodiment, the fuse link defines an array of apertures. **In** an embodiment, the array of apertures is distributed along a direction perpendicular to the separation direction.

In an embodiment, cartridge includes one or more selected from: a ceramic; an epoxy resin; or a mica. In an embodiment, the cartridge includes alumina. In an embodiment, the cartridge includes a glass-fiber reinforced epoxy resin. In an embodiment, the cartridge includes phlogopite mica sheets.

In an embodiment, the adjacent tabs and the fuse link include copper or aluminum. In an embodiment, the adjacent tabs and the fuse link include nickel.

According to a second aspect there is provided an electrical system comprising a plurality of busbars, each busbar being in accordance with the first aspect, each tab being electrically coupled (e.g., electrically connected) to an anode of a first energy storage device and to a cathode of a second energy storage device.

In an embodiment, the first energy storage device and the second energy storage device form a respective pair of energy storage devices to which each tab is electrically coupled (e.g., electrically connected).

According to a third aspect there is provided a vehicle comprising a busbar in accordance with the first aspect or an electrical system in accordance with the second aspect. In an embodiment, the vehicle is an aircraft.

### BRIEF DESCRIPTION OF THE DRAWINGS

Embodiments will now be described by way of example only with reference to the accompanying drawings, in which:
FIG. 1 is a top view of an aircraft comprising an electrical system;
FIG. 2 is a diagram of an example electrical system comprising a plurality of busbars, the example electrical system being suitable for use in the aircraft of FIG. 1;
FIG. 3 is a top view of a part of a first example busbar suitable for use in the electrical system of FIG. 2;
FIG. 4 is a further top view of the first example busbar of FIG. 3;
FIG. 5 is a side view of the first example busbar of FIGs. 3 and 4;
FIG. 6 is a sectional view of the first example busbar of FIGs. 3 and 4;
FIG. 7 is a detail sectional view of the first example busbar of FIGs. 3 and 4;
FIG. 8 is an exploded perspective view of the first example busbar of FIGs. 3 and 4; and
FIG. 9 is an exploded perspective view of a second example busbar suitable for use in the electrical system of FIG. 2.

### DETAILED DESCRIPTION

### Aircraft

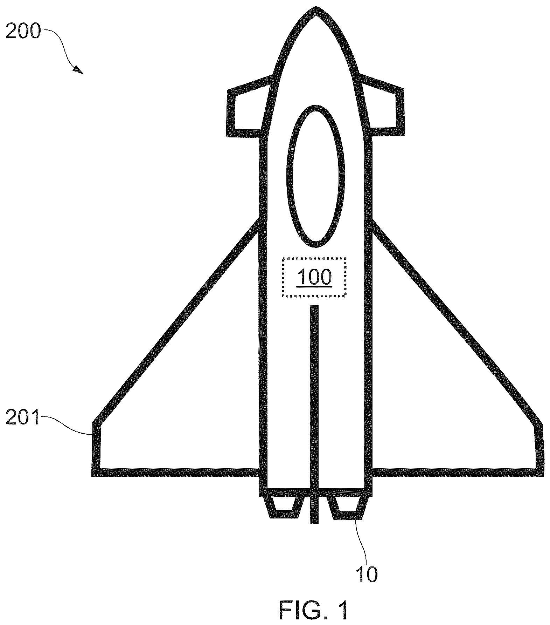

FIG. 1 shows a simplified and schematic view of an aircraft 200 comprising an airframe 201, a propulsion machine 10 and an electrical system 100. The propulsion machine 10 may be a gas turbine engine 10 comprising a plurality of compressors and a plurality of turbines which drive a respective one of the compressors by suitable interconnecting shafts. The electrical system 100 may be configured to provide electrical power to, and/or receive electrical energy from, an electric machine (e.g., a motor and/or a generator) which is mechanically coupled to at least one of the interconnecting shafts. In addition or instead, the electrical system 100 may may be configured to provide electrical power to, or receive electrical energy from, other components of the aircraft 200 (e.g., an avionics or flight control system).

### Electrical system

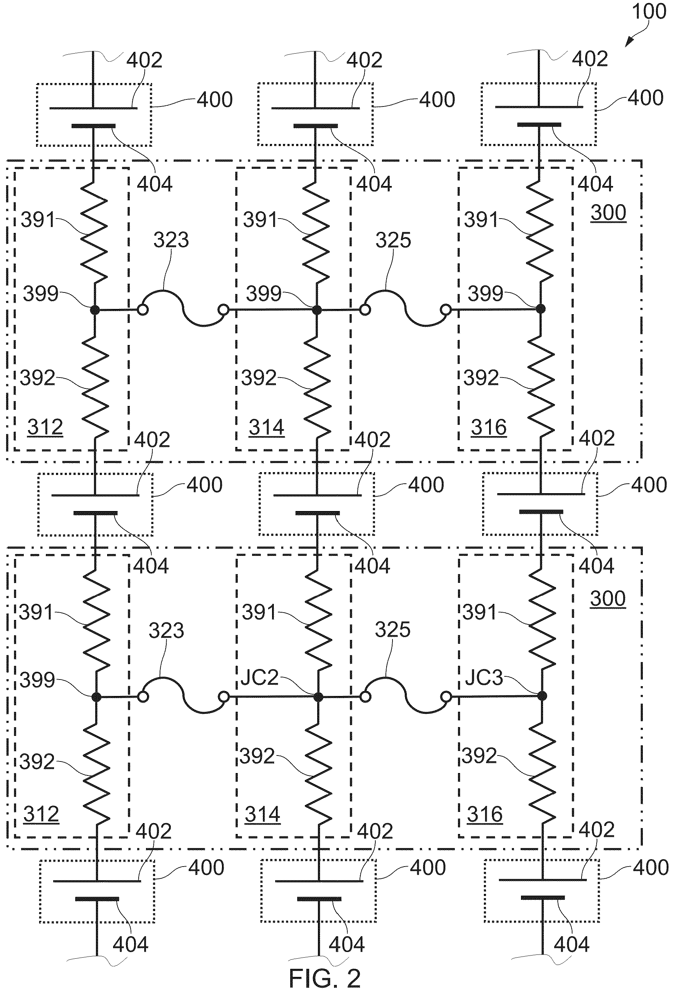

FIG. 2 shows a diagram of an example electrical system 100 suitable for use as the electrical system 100 of the aircraft 200 shown by FIG. 1. The electrical system comprises a plurality of busbars 300 and a plurality of electrical energy storage devices 400. In this example, the each electrical energy storage 400 is a battery cell and the electrical system 100 may be or form part of a battery system/module. In other examples, one or more of the electrical energy storage devices 400 may be a fuel cell (e.g., a hydrogen fuel cell). Each electrical energy storage device 400 comprises an anode 404 and a cathode 402.

### Busbar

Each busbar 300 comprises a plurality of tabs 312, 314, 316 and a plurality of fuse links 323, 325. In this example, the plurality of tabs 312, 314, 316 includes a first tab 312, a second tab 314 and a third tab 316 such that each busbar 300 comprises three tabs 312, 314, 316. However, busbars 300 comprising more than three tabs 312, 314, 316 are envisaged. In the example of FIG. 2, each tab 312, 314, 316 is represented by two resistive elements 391, 392 which are connected through a junction 399.

Each tab 312, 314, 316 is electrically couplable (e.g.,. directly electrically connectable) to, and is coupled (e.g., directly electrically connected) to, a respective pair of the plurality of electrical energy storage devices 400. Specifically, each tab 312, 314, 316 is electrically coupled (e.g., directly electrically connected) to the anode 404 of one (e.g., a first) of the respective pair of electrical energy storage devices 400 as well as being electrically coupled (e.g., directly electrically connected) to the cathode 402 of the other (e.g., a second) of the respective pair of electrical energy storage devices 400.

The first tab 312 is electrically coupled (e.g., directly electrically coupled) to the second tab 314 by the first fuse link 323. In turn, the second tab 314 is electrically coupled (e.g., directly electrically coupled) to the third tab 316 by the second fuse link 325. In the example of FIG. 2, each fuse link 323, 325 is represented as being connected to the respective tabs 312, 314, 316 at the junction 399 between the resistive elements 391, 392.

As shown by FIG.2, the electrical system 100 comprises multiple electrical energy storage devices 400 arranged in both series and parallel. That is, the electrical system 100 of FIG. 2 comprises multiple parallel strings of electrical energy storage devices 400. The total number of parallel strings (e.g., denoted as #P, where # is the number of parallel strings), and the number of electrical energy storage devices in each string, may be selected to achieve a desired operating (e.g., output) voltage and capacity of the electrical system 100. By way of example, the electrical system may have a 2P, a 3P, a 6P, a 50P arrangement or an arrangement of a different (e.g., a larger) number of parallel strings. For enhanced versatility, the number of parallel strings and/or number of electrical storage service in each string may be adaptable to (e.g., reconfigurable for) different applications (e.g., intended uses).

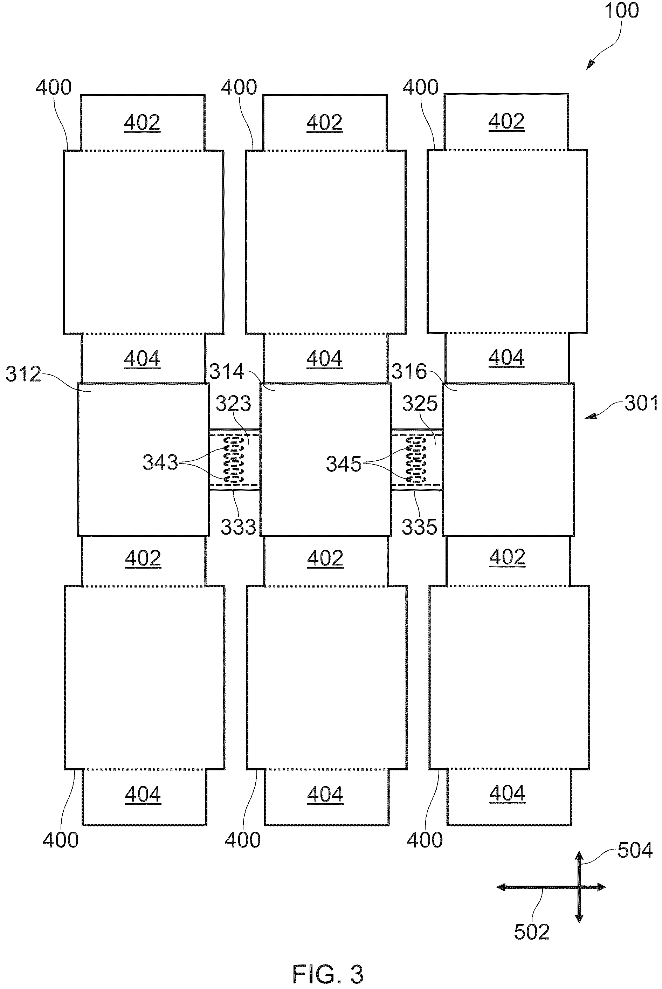

The following description of a busbar 300 suitable for use as the busbar(s) 300 of FIG. 2 is provided with particular reference to FIGs. 3 to 9.

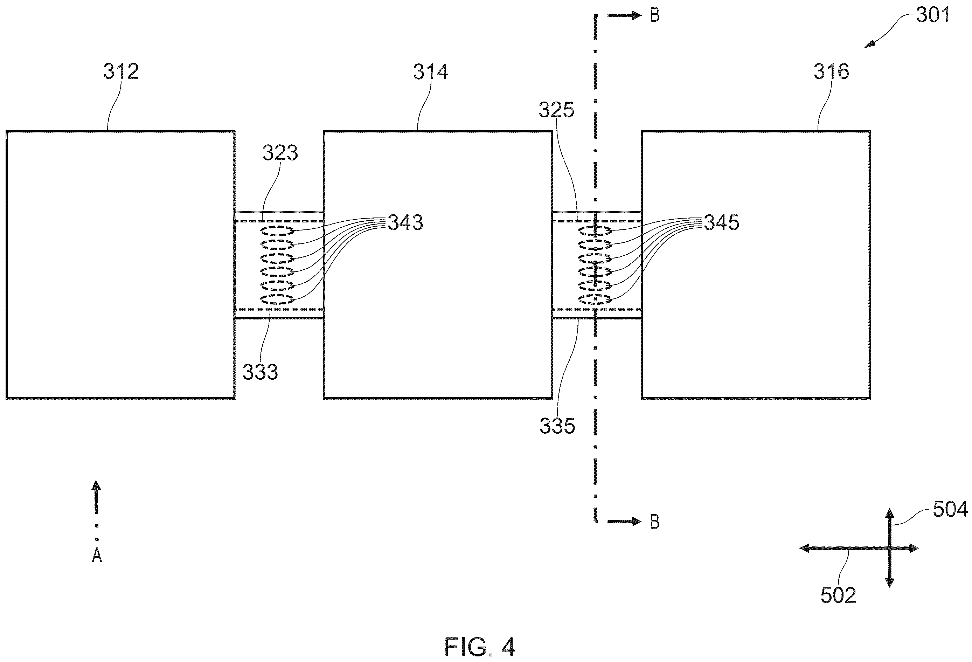

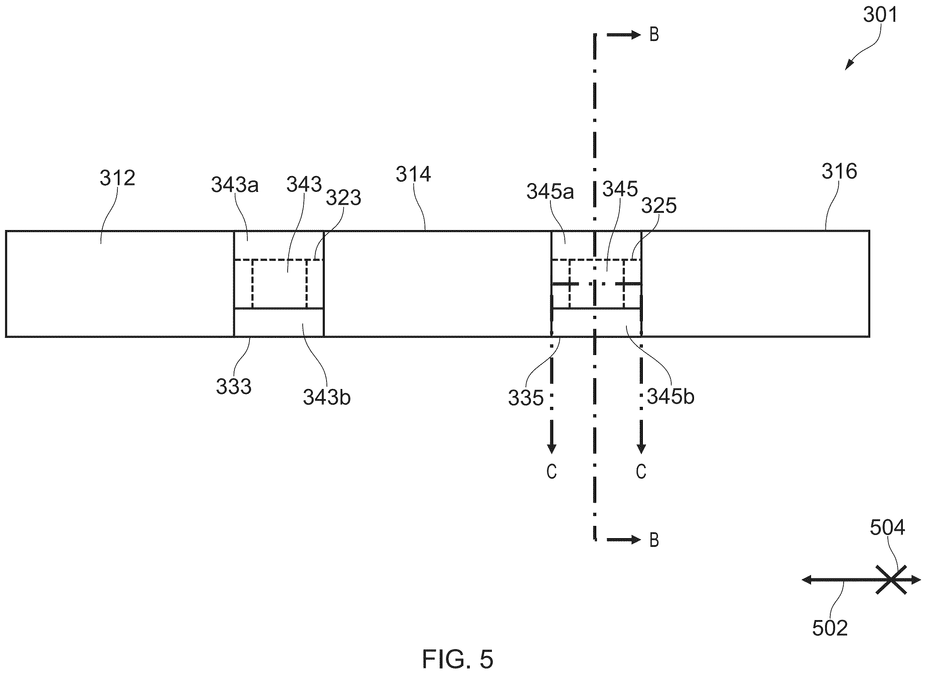

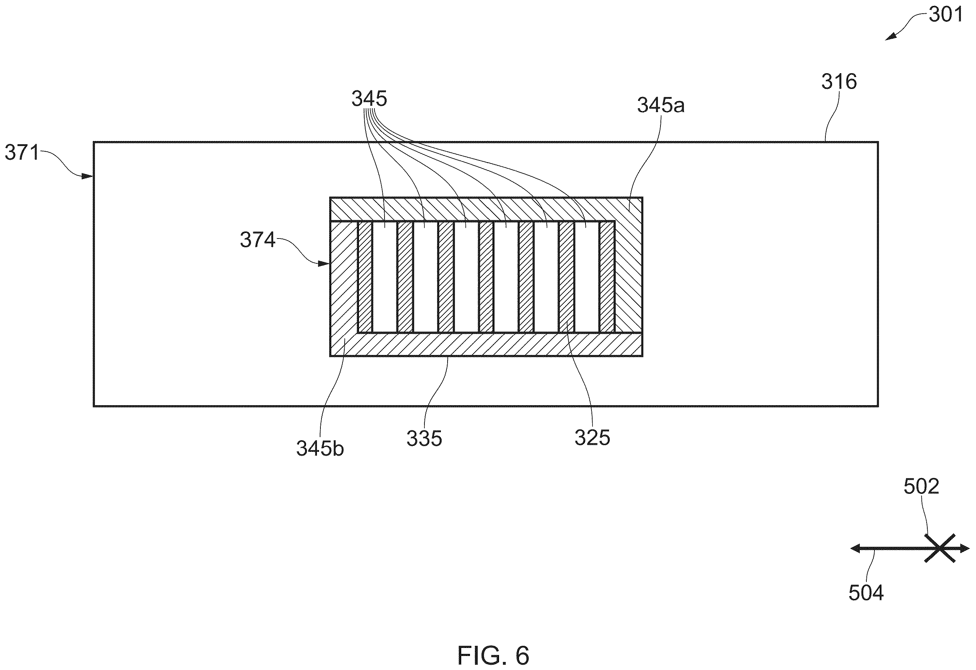

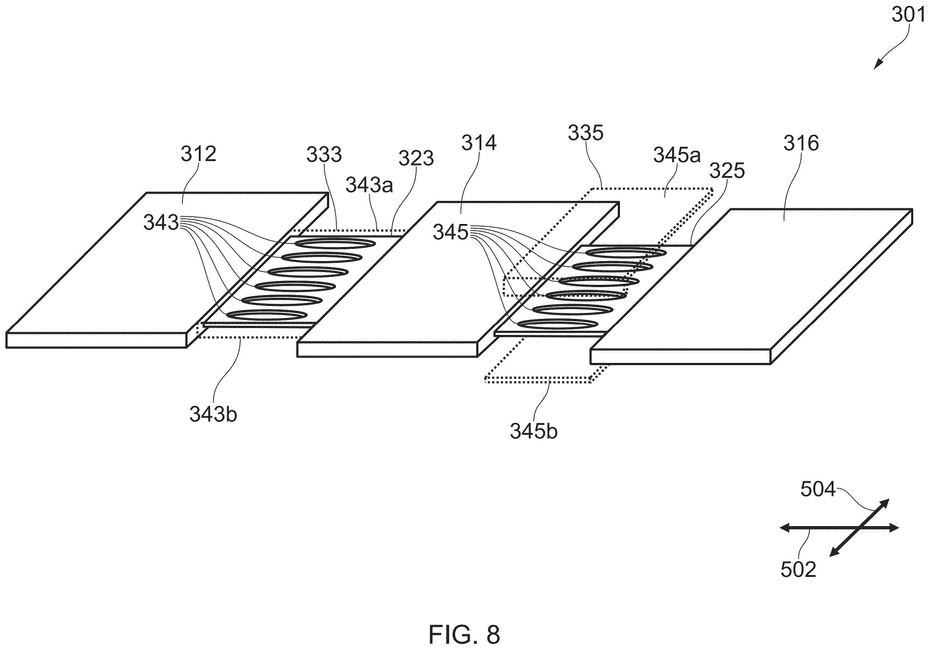

FIGs. 3 to 9 show various views of a first example busbar 301 suitable for use as the busbar(s) 300 of FIG. 2. Of these, FIG. 3 is a top view of the first example busbar 301 shown with a plurality of electrical energy storage devices 400 being electrically coupled thereto, FIG. 4 is a top view of the first example busbar 301 alone (i.e., without the plurality of electrical energy storage devices 400 being shown), FIG. 5 is a side view of the first example busbar 301 as seen in the direction of arrow A indicated on FIG. 4, FIG. 6 is a sectional view of the first example busbar 301 through section B-B indicated on FIGs. 4 and 5, FIG. 7 is a detail sectional view of the first example busbar 301 through section C-C indicated on FIG. 5, and FIG. 8 is an exploded perspective view of the first example busbar 301. The first example busbar 301 of FIGs. 3 to 8 is generally similar to the busbar(s) 300 shown by FIG. 2, with like reference signs indicating corresponding features. Further, the electrical energy storage devices 400 are generally similar to the electrical energy storage devices 400 shown by FIG. 2, with like reference signs indicating corresponding features.

As best shown by FIGs. 3-5 and FIG. 8, the tabs 312, 314, 316 are offset from one another along a primary separation direction 502. Each fuse link 323, 325 extends along the primary separation direction 502 to provide an electrical coupling between two adjacent tabs 312, 314, 316. Each fuse link 323, 325 is integral with, may be formed from the same material as, the two adjacent tabs 312, 314, 316 between which it extends. The materials from which the fuse links 323, 325 and the tabs 312, 314, 316 are formed may be selected to provide a high level of conductance for (i.e., a low level of resistance to) the flow of an electric current therethrough between the electrical energy storage devices 400. To this end, the fuse links 323, 325 or the tabs 312, 314 may be formed from a material including one or more selected from: copper, aluminum, or nickel. Namely, the body of each fuse link 323, 325 may be formed from aluminum (for a low mass for the busbar 301) or (for handling high electric currents within the busbar 301). Further, each fuse link 323, 325 may be plated with nickel (for better corrosion resistance of the busbar 301).

As best shown by FIG. 3, the pair of electrical energy storage devices 400 coupled to each tab 312, 314, 316 are offset from another along a secondary separation direction 504 perpendicular to the primary separation direction 502, with the respective tab 312, 314, 316 extending between each pair of electrical energy storage devices 400 to provide an electrical coupling therebetween. To aid understanding, the primary separation direction 502 and the secondary separation direction 504 are indicated on each of FIGs. 3 to 8.

A fuse link reference plane is defined as any plane normal to the primary separation direction 502 and intersecting one of the fuse links 323, 325. Similarly, a tab reference plane is defined as any plane normal to the primary separation direction 502 and intersecting one of the tabs 312, 314, 316.

As best shown by FIG. 6, a minimum cross-sectional area of each fuse link 323, 325 in any fuse link reference plane is smaller than a minimum cross-sectional area of each adjacent tab 312, 314, 316 in any tab reference plane. When an electric current flows between adjacent tabs 312, 314, 316 through a respective fuse link 323, 325, an effective resistance to the electric current is largest at the smallest minimum cross-sectional area of the fuse link 323, 325 and the tabs 312, 314, 316. Accordingly, the effective resistance to the electric current flowing between the adjacent tabs 312, 314, 316 through the respective fuse link 323, 325 is largest at the location of the minimum cross-sectional area of the fuse link 323, 325. Because the effective resistance is largest at this location, an amount of Ohmic heating as a consequence of the electric current flowing between the adjacent tabs 312, 314, 316 will also be largest at this location. When a fault electric current (e.g., an excessively large electric current) flows between adjacent tabs 312, 314, 316 through one of the fuse links 323, 325, melting (e.g., and gasification) of the fuse link 323, 325 will occur at and around the location of the minimum cross-sectional area of the fuse link 323, 325. As a consequence of this melting (e.g., and gasification), a gap is subsequently formed in the fuse link at a location which, prior to the formation of the gap, corresponds to the location of the minimum cross-sectional area of the fuse link 323, 325.

In addition, a maximum cross-sectional area of each fuse link 323, 325 in any fuse link reference plane is greater than the minimum cross-sectional area of each adjacent tab 312, 314, 316 in any tab reference plane.

More specifically, each fuse link 323, 325 is sized to break under a fault condition (e.g., when a fault electric current above a predetermined internal fault current threshold flows between adjacent tabs 312, 314, 314) so as to be able to interrupt electric current flow between adjacent tabs 312, 314, 316 and thus protect the electrical energy storage devices 400 coupled thereto. In contrast, the tabs 312, 314 are sized to tolerate a fault condition (e.g., to carry a fault electric currents) up to a predetermined external fault current threshold which is greater than the predetermined internal fault current threshold. The positioning of the fuse links 323, 325 as shown by FIGs. 2 and 3 between parallel strings of electrical energy storage devices 400 enables the fuse links 323, 325 to protect the electrical system 100 from internal-type faults, such as internal short-circuits (as opposed to an external short-circuit) or internal overcurrent events (as opposed to internal overcurrent events).

As best shown by FIGs. 3-4 and FIGs. 6-8, each fuse link 323, 325 includes (e.g., defines) a respective array of apertures 343, 345. Each array of apertures 343, 345 is distributed along the secondary separation direction 504 and are aligned with one another along the secondary separation direction 504. The array of apertures 343, 345 reduces the cross-sectional area of the relevant fuse link 323, 325 in the fuse link reference planes. Specifically, the minimum cross-sectional area of each fuse link 323, 325 in any of the fuse link reference planes corresponds to a centreline of the array of apertures 343, 345 along the secondary separation direction 504 (which corresponds to section B-B as indicated on FIGs. 4 and 5).

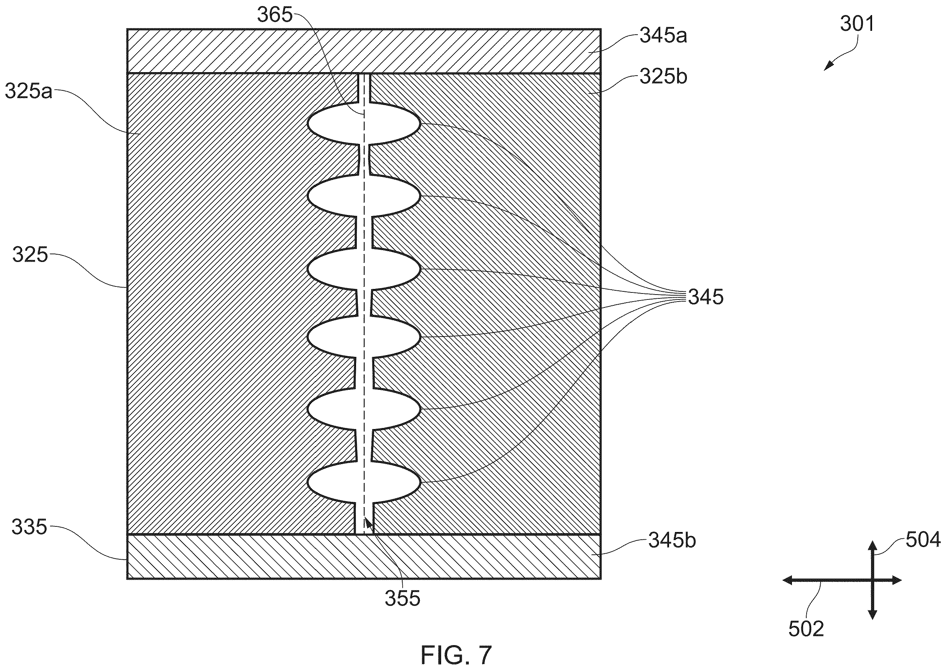

FIG. 7 shows the second fuse link 325 after a fault current has flowed through between the adjacent tabs 314, 316 and resulted in the formation of a gap 355 at a location which, prior to the formation of the gap 355, corresponding to the location of the minimum cross-sectional area of the fuse link 323, 325 at the centreline 365 of the array of apertures 345 along the secondary separation direction 504. The formation of the gap 355 results in the second fuse link 325 being split into two separate and opposing portions 325a and 325b, as shown by FIG. 7.

Each fuse link 323, 325 is surrounded and abutted by a respective cartridge 333, 335. Namely, a first cartridge 333 surrounds and abuts the first fuse link 323 while a second cartridge surrounds and abuts the second fuse link 325. As best shown by FIGs. 5-7, each cartridge is formed of a respective pair of complementary elements 343A, 343B and 345A, 345B which cooperate to surround and abut the corresponding fuse link 323, 325. In the example of FIGs. 3 to 8, and as best shown by FIG. 6, each complementary element 343A, 343B, 345A, 345B has the form of a prism with an L-shaped cross-section in a plane normal to the primary separation direction 502, and with the major axis (e.g., the centreline) of the prism extending along the primary separation direction 502. However, other shapes for the complementary elements 343A, 343B, 345A, 345B are envisaged. For example, each complementary element 343A, 343B, 345A, 345B may have the form of a prism with a U-shaped cross-section in a plane normal to the primary separation direction 502. In the example of FIGs. 3 to 8, the complementary elements 343A, 343B, 345A, 345B of the cartridges 333, 335 are fixed to each other and to the respective fuse links 323, 325 by means of an adhesive. However, other means of fixing between the cartridges 333, 335 the respective fuse links 323, 325 are envisaged (e.g., by means of mechanical fasteners such as nut-and-bolt combinations). In other examples, the cartridges 333, 335 are not fixed to the respective fuse links 323, 325.

Each cartridge 333, 335 is coextensive with the respective fuse link 323, 325 between the adjacent tabs 312, 314, 316 along the primary separation direction 502. Each cartridge 333, 335 surrounds and abuts the respective fuse link 323, 325 throughout the extent of the fuse link 323, 325 between the adjacent tabs 312, 314, 316 along the primary separation direction 502, including at the location of the minimum cross-sectional area of the fuse link 323, 325 in any of the fuse link reference planes.

Each cartridge 333, 335 is configured to inhibit electrical arcing across the opposing portions 325a, 325b of the respective fuse link 323, 325 separated by the gap 355 formed as a consequence of a fault electric current (or, more simply, a fault current) flowing between the adjacent tabs 312, 314, 314 through the fuse link 323, 325.

That is, the cartridges 333, 335 inhibit (e.g.,. restrict or block) electrical arcing along paths which do not pass directly across the gap 355 formed in the respective fuse link 323, 325. Namely, the cartridges 333, 335 inhibit arcing along paths which pass "up and over" the gap 355 (e.g., paths which at least partially extend in a direction mutually perpendicular to the primary separation direction 502 and the secondary separation direction 504), "up and around" the gap (e.g., paths which at least partially extend along the secondary separation direction 504). The cartridges 333, 335 also inhibit (e.g., restrict or block) electrical arcing from the gap 355 to nearby components of the electrical system 100, such as the electrical energy storage devices 400. In other words, the cartridges 333, 335 inhibit and contain electrical arcing originating from the gap 355 and help to extinguish electrical arcing across the gap 355. Accordingly, the cartridges 333, 335 may be referred to as containment cartridges 333, 335, arc containment cartridges 333, 335, extinguishment cartridges 333, 335 or arc extinguishment cartridges 333, 335.

A process undergone by the busbar 301 during use may be summarised as follows:
- **initial phase:** the fuse link 323, 325 between two adjacent tabs 312, 314, 316 is in an entirely solid (e.g., single-phase solid) state, thereby maintaining an electrically conductive pathway (e.g., electrical coupling/connection) between the electrical energy storage device(s) 400 coupled to each adjacent tab 312, 314, 316;
- **activation phase:** when a fault condition develops and thus a fault current flows across the fuse link 323, 325 between the adjacent tabs 312, 314, 316, the fuse link 323, 325 begins to undergo Ohmic heating and thus transitions at least in part from solid to liquid (e.g., from single-phase solid to multi-phase solid and liquid or single-phase liquid), which affects the flow of current across the fuse link 323, 325;
- **gasification/separation phase:** as the fuse link 323, 325 continues to undergo Ohmic heating, gasification of the material from which the fuse link 323, 325 is formed begins to occur which initiates the formation of the gap 355, creating a significant resistance to the flow of electric current across the fuse link 323, 325 between the adjacent tabs 312, 314, 316;
- **arc generation phase:** due to the size of the fault current, a localized electrical arc (e.g., across the gap 355 separating the opposing portions 325a, 325b) may form as/immediately after the gap 355 is formed;
- **arc reduction phase:** the cartridge 333, 335 functions to inhibit the electrical arc and prevent arcing from the gap 355 to nearby components of the electrical system 100 (e.g., the electrical energy storage devices 400) while the electrical arc(s) begin(s) to reduce in intensity/frequency as the gap 355 widens; and
- **terminal phase:** the gap 355 has widened to prevent electrical arcing thereacross and the electrical coupling between the adjacent tabs 312, 314, 316 through the fuse link 323, 325 is broken, isolating (e.g., galvanically isolating) the electrical energy storage device(s) 400 coupled to one of the adjacent tabs 312, 314, 316 (e.g., an electrical energy storage device 400 which caused the fault condition) from the electrical energy storage devices (s) 400 to the other adjacent tab 312, 314, 316.

Each array of apertures 343, 345 is substantially equidistant (e.g., equidistant) between the two adjacent tabs 312, 314, 316 along the primary separation direction 502. As a result, and as described above, each fuse link 323, 325 is configured to form a gap 355 at a location which is substantially equidistant between adjacent tabs 312, 314, 316 when a fault electric current flows along the fuse link 323, 325 between the adjacent tabs 312, 314, 316. This ensures that the gap 355 is typically formed at a maximal distance from the tabs 312, 314, 316 and the nearby components of the electrical system 100, such as the electrical energy storage devices 400, which further reduces a risk posed by electrical arcing therefrom.

Each cartridge 333, 335 is formed from a material which provides a high level of insulation from (i.e., a high level of resistance to) the flow of an electric current therethrough. To this end, each cartridge is formed from a material which includes one or more selected from: a ceramic (e.g., alumina); an epoxy resin (e.g., a glass-fiber reinforced epoxy resin); or a mica (e.g., phlogopite mica sheets). The complementary elements 343A, 343B and 345A, 345B of each cartridge 333, 335 are formed of the same material.

A cartridge reference plane is defined as any plane normal to the primary separation direction 502 and intersecting one of the cartridges 333, 335. Because the cartridges 333, 335 and the fuse links 323, 325 are coextensive along the primary separation direction 502, each cartridge plane may correspond to a fuse link reference plane. As best shown by FIG. 6, an external perimeter 374 of each cartridge 333, 335 in any cartridge reference plane normal does not extend beyond (e.g., lies on or within) an external perimeter 371 of each adjacent tab 312, 314, 316 in any tab reference plane. In this way, a low-mass and compact arrangement for the busbar BS1 is provided.

In the example of FIGs. 3 to 8, each tab 312, 314, 316 is substantially planar. Accordingly, each tab 312, 314, 316 has the form of a prism with a rectangle-shaped cross-section in a plane normal to the both the primary separation direction 502 and the secondary separation direction 504. Because of the form of the tabs, the first example busbar 301 may be referred to as a "Type 1" busbar 301.

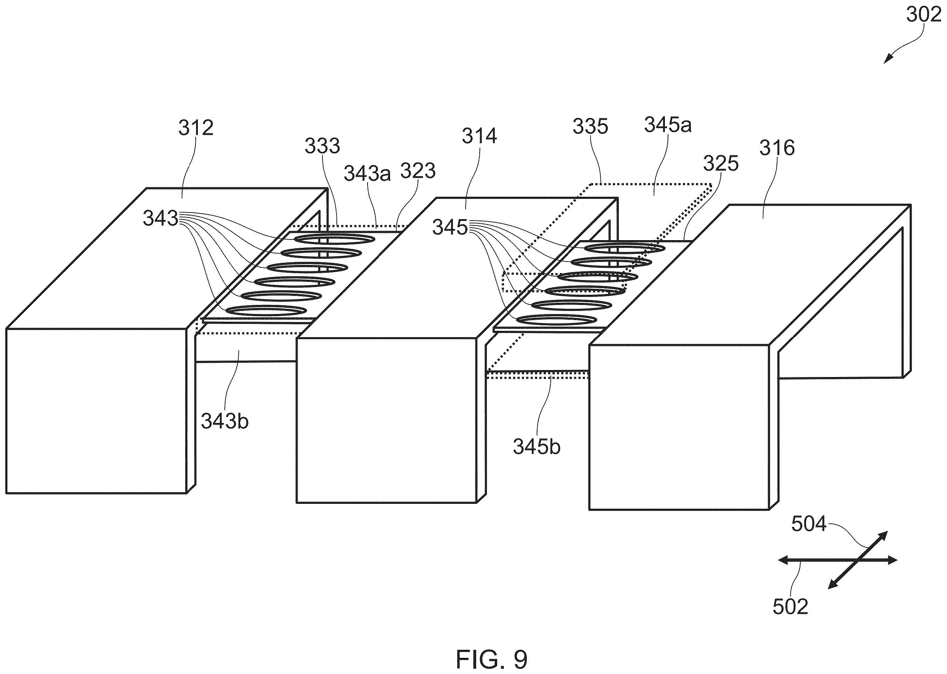

FIG. 9 is an exploded perspective view of a second example busbar 302 suitable for use as the busbar(s) 300 of FIG. 2. The second example busbar 302 is generally similar to the first example busbar 301 described above with reference to FIGs. 3 to 8, with like reference signs indicating identical or similar features. However, in contrast to the first example busbar 301, the tabs 312, 314, 316 of the second example busbar 302 are not substantially planar. Specifically, each tab 312, 314, 316 has the form of a prism with a U-shaped cross-section in a plane normal to the primary separation direction 502. As a result of the form of the tabs, the second example busbar 302 may be referred to as a "Type 2" busbar 302.

Busbars in accordance with the present disclosure promote safety of the electrical connections between electrical components an electrical system, such as a battery system/module/pack. Busbars in accordance with the present disclosure both provide appropriate isolation between components under fault conditions by forming a gap within a fuse link thereof and provide inhibition/containment of electrical arc originating from the gap. As a result, busbars in accordance with the present disclosure may reduce a risk of secondary faults (e.g., fault propagation) within an electrical system comprising the busbar caused by arcing across or from the gap formed in the fuse link. Accordingly, electrical systems comprising busbars in accordance with the present disclosure may possess greater degrees of reliability.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A busbar comprising:
a plurality of tabs offset from one another along a separation direction, each tab being configured to electrically couple with at least one energy storage device;
a fuse link extending between two adjacent tabs of the plurality of tabs, the fuse link being configured to form a gap when a fault current flows along the fuse link; and
a cartridge surrounding the fuse link and configured to inhibit electrical arcing originating from the gap.

2. The busbar of claim 1, wherein the cartridge abuts the fuse link.

3. The busbar of claim 1 or claim 2, wherein the cartridge includes complementary elements, and wherein the complementary elements cooperate to surround the fuse link.

4. The busbar of any preceding claim, wherein the cartridge surrounds the fuse link at a location of a minimum cross-sectional area of the fuse link in any reference plane normal to the separation direction.

5. The busbar of any preceding claim, wherein an external perimeter of the cartridge in any reference plane normal to the separation direction does not extend beyond an external perimeter of each adjacent tab in any reference plane normal to the separation direction.

6. The busbar of any preceding claim, wherein a minimum cross-sectional area of the fuse link in any reference plane normal to the separation direction is smaller than a minimum cross-sectional area of each adjacent tab in any reference plane normal to the separation direction.

7. The busbar of any preceding claim, wherein the fuse link defines an array of apertures, and wherein the array of apertures is distributed along a direction perpendicular to the separation direction.

8. The busbar of any preceding claim, wherein the cartridge includes one or more selected from: a ceramic; an epoxy resin; or a mica.

9. The busbar of any preceding claim, wherein the cartridge includes alumina.

10. The busbar of any preceding claim, wherein the cartridge includes a glass-fiber reinforced epoxy resin.

11. The busbar of any preceding claim, wherein the cartridge includes phlogopite mica sheets.

12. The busbar of any preceding claim, wherein the adjacent tabs and the fuse link include copper or aluminum.

13. The busbar of claim 12, wherein the adjacent tabs and the fuse link include nickel.

14. An electrical system comprising a plurality of busbars, each busbar being in accordance with any preceding claim, each tab being electrically coupled to an anode of a first energy storage device and to a cathode of a second energy storage device.

15. A vehicle comprising the busbar of any of claims 1 to 13.
